# EUROPEAN PATENT APPLICATION

(11) **EP 1 762 934 A1**
(43) Date of publication of application: **14.03.2007**
(21) Application number: 05019683.1
(22) Date of filing: 09.09.2005
(51) Int. Cl.: G06F 9/455, G06F 9/445

(54) **Automatic component removal at release**

(71) Applicant: MATSUSHITA ELECTRIC INDUSTRIAL CO., LTD., Kadoma-shi, Osaka 571-8501 (JP)
(72) Inventor: Pfeiffer, Gerald, 76337 Waldbronn-Etzenrot (DE); Vogler, Jörg, 65239 Hochheim (DE); Miyazaki, Akihiro, Sakai-City Osaka, 591-8032 (JP); Fujita, Takahisa, Ikeda-city Osaka 563-0036 (JP)
(74) Representative: Grünecker, Kinkeldey, Stockmair & Schwanhäusser Anwaltssozietät

(57) **Abstract**

The present invention relates to an improved release of a component. When a component relating to an issued release request is currently in use, the request for releasing a component is stored. The usage of the components relating to a stored release request are monitored. As soon as it is detected that a component is no longer in use, the stored release request is automatically executed. By this way, a component is released immediately after all processes using the component have been terminated. As the release request is stored, only a single release request has to be issued.

## Description

The present invention relates to an improved apparatus and method for releasing a component installed on a device. Particularly, the present invention relates to a release of a component being in use when receiving a release request.

The features of many modern electronic devices can be expanded or modified by adding further components. For this purpose, an additional hardware component is connected to the device. Thus, new features provided by the hardware component are added to the device. For example, the storage capacity can be expanded by plugging in a memory card or a storage device. Further, new features can be added on demand, for instance, by adding a pluggable camera device or a wireless network connector.

On the one hand, pluggable hardware components are able to expand the functions of a device. On the other hand however, pluggable hardware components also increase the power consumption or the weight and size of the device. This is a disadvantage in particular for a mobile or battery powered device. Hence, such pluggable components preferably are only connected to the device when the respective functions are required. If the functions of such a pluggable hardware component are no longer needed, the user may wish to remove the component in order to decrease the power consumption or reduce the weight and size of the device.

Another aspect to expand the function of the device is a use of so-called software components or modules. These components contain a software code for instructing a microprocessor to carry out particular functions.

To make a software component available to the processor the software component is installed in the programme memory of the device. For this purpose, the software code is stored in the programme memory and the position of the software code in the memory is registered in a table showing the available software components. Thus, the function of a device can easily be expanded or modified without changing the hardware of the device by simply adding or replacing a software component.

However, as the programme memory of each device has a limited capacity, only a limited number of software components can be installed in this memory. If the amount of free programme memory space is less than the size of a new software module, a software component currently installed in the memory has to be removed before installing the new software component.

Further, when updating a component by replacing a present version of a software component by another newer version, the present component also is to be removed before the new version is installed.

As shown in the above, there is a need to remove hardware components as well as pluggable software components. To control the removal, a component is to be released before the component can be uninstalled or removed from the device. Otherwise, the removal of a component will risk to cause system instabilities or data loss. For instance, if a component for storing data is removed before a storage process is completed, it will be not possible to complete the storage process. Thus, the remaining unsaved data are lost. In order to avoid such a risk only unused components are released.

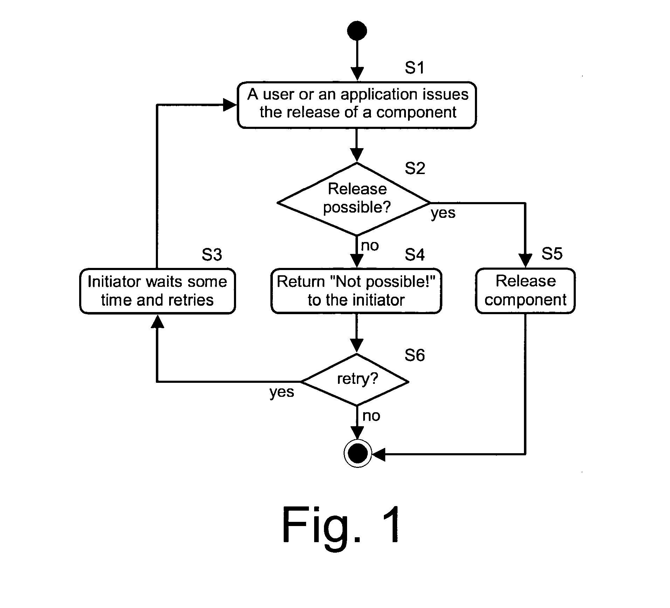

Fig. 1 illustrates a flowchart of an example for releasing a component. When a request for releasing a component has been issued (Step S1), step S2 determines whether or not the component is currently in use. If the component is currently not employed by any processes, step S5 releases the component. Otherwise, step S4 rejects the release request. To maintain the release request, the initiator of the request has to wait some time and send a new release request (step S3). The release request is to be repeated until the respective component is no longer in use and a release is possible. If the release request is not repeated until the component is unused the request will not be successful and the respective component is not released.

Since a user usually does not know all the processes currently occupying a component, it is difficult to determine the point in time when the component is no longer employed and can be released. Thus, a successful release of a component will be only possible by trial and error, which is annoying to the user.

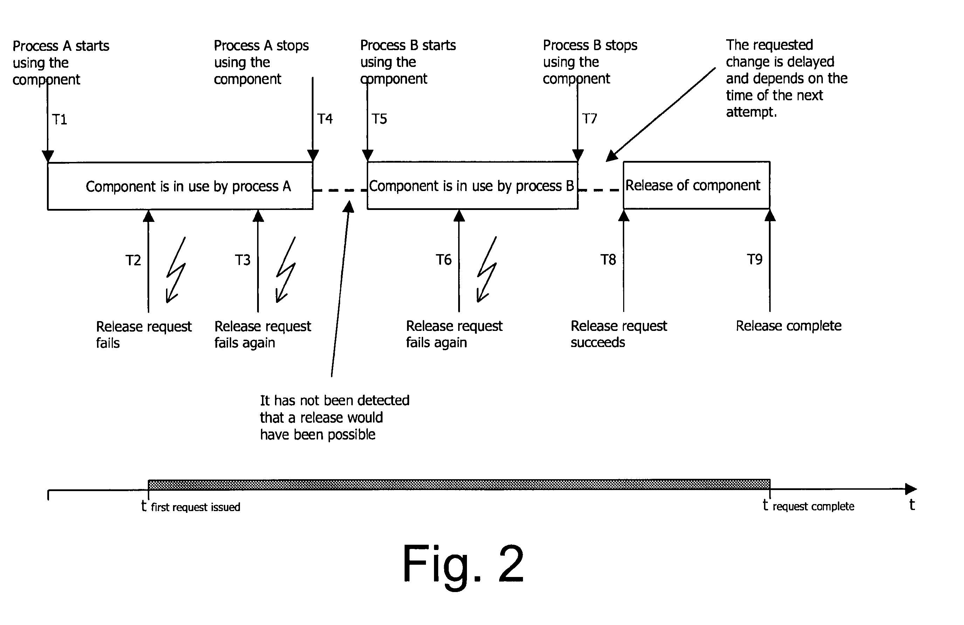

Fig. 2 illustrates a timing diagram for releasing a component according to the above described releasing procedure. A first process A is using the component from time T1 to T4. In the meantime two release requests are issued at T2 and T3 but failed as the component is still in use. Further, the component is employed by process B from T5 to T7. Thus, an additional release request at T6 fails, too. After process B has stopped, a successive release request at T8 succeeds and the release of the component s completed at T9.

As shown in Fig. 2, when a user does not timely recognise the moment T4 when the component is no longer occupied by a process A, a further process B is employing the relating component before the next release request will be issued (T6). In this case, a release will not be possible until process B has terminated, too. Thus, the release of the component is delayed for an additional time.

To accelerate the release of a component, some systems immediately terminate all processes employing the component when receiving a release request. After all processes are stopped, the component is released and the respective processes are restarted. However, it will be annoying to the user when the processes currently running on the device suddenly are terminated and restarted without any warning.

Some components are permanently in use by one or more of the processes running on the device. To release and uninstall these components, it is necessary to restart the device either automatically or manually. In this case, the respective component is released during the initialisation procedure of the device before the component is used by any processes again.

Usually, the release and the successive removal, uninstallation, re-installation or update is controlled by the operation system of the device. Thus, the operation system can easily prevent the uninstallation or modification of a software component before the component is released.

In contrast to this, a hardware component is usually physically available to the user. Thus, if the user is not aware of any further processes currently employing a component, the user will unplug the component although the component is in use. Additionally, a user may become impatient after some unsuccessful release requests and unplug the component even though he is aware that the component is currently in use. In both cases, the user will risk to compromise the proper function of the device.

In order to prevent such an unallowable removal of a hardware component, the advance configuration and power interface specification (ACPI) defines a method to lock and unlock a removable device mechanically by the operation system. In particular, the component is locked when it is installed on the device and after the component is released it is unlocked.

A "hot unplugging" of a storage device is described in US-A-2004/177180. Each time when the access to the device has been completed, the storage device is automatically unmounted. Any new access to the storage device automatically causes the system to remount the storage device. Thus, the probability that a user will remove the storage device while it is mounted is reduced. When the device is unmounted, a save removal of the device is possible. However, while the storage device is mounted to the system a removal will still cause system instabilities or a data loss. Further, the device has to be mounted before and unmounted after each access to the device. Thus, this process is very complex and time consuming and an access to the device is only possible with a time delay.

In all cases, a release of a software component or hardware component is only allowable, if the respective component is currently not in use. Otherwise, the processes employing the component have to be terminated, or the release request is rejected and the user has to repeat the request at a later time again.

In view of these prior art drawbacks, the present invention aims to provide an improved apparatus and method for releasing a software component or hardware component when the respective component is currently in use.

This is achieved by the features of the independent claims.

According to a first aspect of the present invention, a releasing apparatus for releasing a component being installed on a device is provided. The device is executing pre-determined operations employing the component. A release request for releasing the component is received by a receiver. A determiner is determining whether or not the component is currently in use. If the component is currently in use the release request is stored in a request memory. The use of the component is monitored by a monitor. Upon the monitor is indicating that the component is no longer in use, the component is released by a releasing means.

According to another aspect of the present invention, a method for releasing a component installed on a device is provided. The device is executing pre-determined operations employing the component. A release request for releasing the component is received. Thereon, it is determined whether or not the component is currently in use. If the component is currently in use the release request is stored in a release memory. Further, the use of the component is monitored. When the monitoring operation is detecting that the component is not in use, the component is released.

It is the particular approach of the present invention to automatically initiate a release procedure for a component being currently in use when a release request is received. For this purpose, the release request is memorised and the use of the component is monitored. Only upon detecting that the component is no longer in use the release request is automatically executed.

In this way, it is possible to reduce the time until the component is released. Furthermore, the release is to be requested only once and it is not necessary to repeat a release request when the respective component is currently in use. Additionally, the device is continuing its normal operation. It is not required to restart the device or to terminate a running process to proceed the release request.

Preferably, the release memory is a non-volatile memory. Preferably, this release memory is at least one of a memory card, a hard disk, and an optical memory device. When a release request is stored in such a non-volatile memory the release request can be maintained even after a power loss occurs or the device has been switched off.

Preferably, a user is notified before the respective component is released. Thus, the user is informed that the component will be released and thereon the respective component is no longer available.

Preferably, a user is further notified after the component has been released. Thus, it is indicated to the user that the release of the component is completed. Thereon, the user is allowed to remove the component.

Preferably, an additional user confirmation is awaited before releasing the component. If the component is currently in use when the release is requested, additional time elapses until the component becomes unused and the release request will be executed. In the meantime the reasons for releasing the component may have changed. For example, the user wants to use the component again in a short time. It is for this purpose that the component is only released if the user additionally confirms the execution of the release request.

Preferably, the release is started if the release request is not executed within a pre-determined time. Consequently, it is ensured that a release request is executed within this pre-determined time, even if the component is still in use.

Preferably, the release request is abandoned if the release is not executed within a pre-determined time. When the release is not executed within a pre-determined time, it is assumed that the circumstances causing the release request have changed and the release is no longer required.

According to a preferred embodiment, a priority information in association to each releasing request is stored. This priority information is prioritising the execution of the respective release request. Consequently, high priority release requests are executed preferred.

Preferably, a release request can be accelerated by performing an acceleration procedure. Preferably, different acceleration procedures are selected depending on the priority information assigned to respective release requests. Thus, it is possible to accelerate a release of a high priority more than a request having a lower priority.

Preferably, the priority information is modified if the release request is not executed within a pre-determined time. The release of a component starts with a low priority and the priority is increased within the time.

According to another preferred embodiment, a stored release request is executed upon the device changes into a pre-determined state. When the device changes into a pre-determined state, it is expected that most processes will stop. For example, the predetermined state is a standby mode, a power-save mode, a connection of a mobile device to a docking station or a particular network connection.

Preferably, the release request is executed when the device is re-started. When the device is shut down and re-started, all processes will stop. Consequently, all components are becoming unused and thereon each component can be released.

According to a further preferred embodiment, an access request for a released component is received, the received access request is stored, and the stored access request is supplied to the respective component upon the component is reinstalled or updated. In this manner, an access request of a temporarily unavailable component will not fail and the access request is forwarded to the re-installed or updated component as soon as possible when the new component is available again.

According to another preferred embodiment, a dummy component is installed for receiving and storing the access requests, and for sending the access request to the respective component. Consequently, all processes can send their access requests in the usual manner to a component and the dummy component is handling the requests until the new component is reinstalled or updated.

Preferably, the component is a pluggable hardware component. Such a component is physically connectable to the device and provides additional hardware resources to the device.

Preferably, the hardware component is automatically ejected after completing the release request. Consequently, the user receives a physical response after the component is released. Further, the hardware component is not physically available to the user until the component is successfully released. Thus, the user cannot remove the component before the release is completed.

Preferably, the hardware component is locked when installing the component and unlocked after completing the release request. In this manner, it is only possible to remove the hardware component if the respective component is released.

According to another preferred embodiment, the release request is a request for releasing a dynamically linkable software component. Such a software component is a software code installed in the programme memory of the device.

Preferably, the software component is copied to another memory before releasing the component in the programme memory. Thus, the software component can be removed from the program memory, for instance, to obtain free programme memory space. On the other hand, the copied software component is still available for a later re-installation in the programme memory. Hence, the released component is not completely lost and it is possible to restore the software component at a later time.

According to another preferred embodiment, a further software component is downloaded. This further component is installed in the programme memory to replace the released component. For example, the further software component is an update of a presently installed component, or a new component providing additional or different features.

Preferably, the releasing step is only executed if the present software component is not in use and the further software component is available over the network. When the other software component is not available, for instance, due to a broken network connection, the release is not executed. Otherwise, neither the old nor the new component would be available after releasing the old component, and the relating features will be lost.

Preferably, the component is released upon completing the download of the further software component. In this manner, the installation of the new software component can be started immediately after the old component is released. Thus, the time period in which neither the old nor the new component is available is reduced. Further, the new component is available in a local memory before the old component is released. Hence, it is guaranteed the old component is only released if the new component is available.

Although the present invention addresses the release of a component in a very general device, the present invention preferably relates to mobile devices. It is the objective of a mobile device to provide a plurality of features. On the other hand, the mobile device is limited, for instance, in power consumption, weight and size. Thus, a mobile device usually provides only some basic features. Further features can be included by installing additional software and hardware components. If a component is no longer needed, the relating component may be removed to reduce the power consumption and to decrease the weight and size of the device.

Preferred embodiments of the present invention are the subject matter of dependent claims.

The above and other objects and features of the present invention will become more apparent from the following description and the preferred embodiments, in which:
- Fig.1: illustrates a flow chart of a release procedure known from the prior art;

- Fig. 2: illustrates a timing diagram of the release procedure according to Fig. 1;
- Fig. 3: illustrates a timing diagram for updating a component according to the prior art;
- Fig.4: illustrates a flow chart of a release method according to the present invention;
- Fig.5: illustrates a timing diagram of a release procedure according to the present invention;
- Fig. 6: illustrates a block diagram of a releasing apparatus according to the present invention;
- Fig. 7: illustrates a timing diagram for releasing a component as known from prior art in the case of a power loss;
- Fig. 8: illustrates an example for releasing a component in the case of a power loss according to the present invention.
- Fig. 9: illustrates a flow chart of an access request to a released component;
- Fig. 10: illustrates a timing diagram of an update procedure according to the present invention; and
- Fig. 11: illustrates a timing according to another embodiment of the present invention for updating software component;

The present invention relates to a releasing of components, especially to the releasing of software components and hardware components installed on a device.

The advantages of the present invention will become most apparent for a mobile device. The expression mobile device comprises any device being able to operate without a wired power supply. Examples for a mobile device are any mobile computer, for instance, a laptop computer, a handheld computer, or a personal digital assistant (PDA). Further examples for a mobile device are a mobile phone, a digital camera, or a portable audio or video player/recorder.

A mobile device usually runs by one or more batteries. Thus, it is necessary to minimize the power consumption in order to achieve a long operation time. Furthermore, the mobile device aims to provide a large number of features by only limited weight and size. Therefore, only a limited number of basic features are included on the device. Further features are added on demand.

Although the present invention mainly addresses to mobile devices, the present invention is also applicable to any other device employing additional components. For example, modern computer devices use additional components as well as consumer electronics, or domestic appliances. Further devices employing additional components on demand can be found in industrial applications, for instance, when adapting an machine to a particular manufacturing process. The features of all these devices are enhanced by installing further components. This is achieved by the installation of hardware components as well as by software components.

In regard to a hardware component, the features of the device are enhanced by means of pluggable hardware components. Examples of pluggable hardware components are PCMCIA cards, storage devices, or additional components providing particular features to the device. For example, an additional component provides a pluggable camera, an adaptor providing a particular interface, or a particular network connector, for instance, a GSM adaptor or a wireless LAN card. Further, the component may be a hard disk drive, an optical storage device, a recording medium, for instance, a rewritable CD or DVD or any other pluggable device.

On the other hand, the features of the device are also enhanced and modified by additional software components. A software component contains code for instruction a processor of the device to carry out particular operations. This software code usually is provided to the device in a dynamically linkable software component. An example for a software component is a particular driver software for controlling a hardware component, e.g. employing a network adaptor or a storage medium. Further, examples of software components are internal routines, for instance, a particular coding/decoding routine, or a user application, e.g. a downloadable game.

In order to install a software component on the device, the software code is copied to a programme memory and the address where this software code has been stored in the memory is indicated to the operating system of the device. When the component is to be uninstalled, the operation system is informed that the component is no longer available. Thereon, it is possible to delete or overwrite the relating software code in the programme memory. Consequently, the uninstalled software component is no longer available.

However, it is only permitted to remove both, software and hardware components if the component is currently not used by any processes running on the device. Otherwise, the device will run the risk of system instabilities or a data loss. It is for this purpose that it is determined whether or not a component is use before the component is removed. If the component is presently not in use, it is indicated to the device that the component is no longer available for any further operations. This process of determining whether the component is in use and making the component unavailable is referred in the following as a releasing of the component. A release of a component is always required before the respective component is removed or modified.

Accordingly, it is required to release a software component before the component is uninstalled, updated or reinstalled. Further, it is only permitted to remove a hardware component without running the risk of data loss or system instabilities after the release of the component has been completed.

Usually, a hardware component is physically available to the user. Consequently, the user can unplug the component even though the component is still in use and the release is not completed. However, a removal of a component currently still in use has to be avoided. For this purpose, the component is loaded completely inside the device when the component is installed. After the component is released, the respective component is ejected and made available to the user again.

Consequently, the user cannot remove the component before the release is completed.

However, it is not possible to prevent an unallowable removal by this way for all types of hardware components. Therefore, another example to protect the hardware component against an unallowable removal is to lock the component while the component is installed on the device. This is achieved by means of a mechanical locking mechanism, for instance, by a magnetic latching mechanism, or a motor driving a latch into a predetermined position. After the release of the component is completed, the component is unlocked again and a removal of the component is possible.

A conventional release procedure is illustrated in Fig. 1. After the release of a component is requested, it is determined whether or not the relating component is currently in use. If the component is currently not in use the component is released. Otherwise, the release request is rejected and it is indicated to the initiator of the release request that the release is currently not possible. In order to maintain the release request, the request has to be manually repeated until the relating component is no longer in use.

Fig. 2 illustrates a timing diagram according to the conventional release procedure. The release requests at T2 and T3 fail as long as the component is employed by process A. As it is not apparent to the initiator of the release request when process A stops using the component at the time T4, a further time elapses before the next release request will be issued (T6). In the meantime, at T5 another process B starts using the component. Thus, all further release requests also fail as long as the component is now in use by process B. When process B stops (T7) using the component, a further release request is issued after some time T8. If the component is not employed by another process, this release request will be successful and the component is released. As can be seen in the timing diagram, a plurality of release requests (T2, T3, T6) have to be issued, until the component is released. Further, there may be a long time period between the issue of the first release request and the moment when the component is finally released.

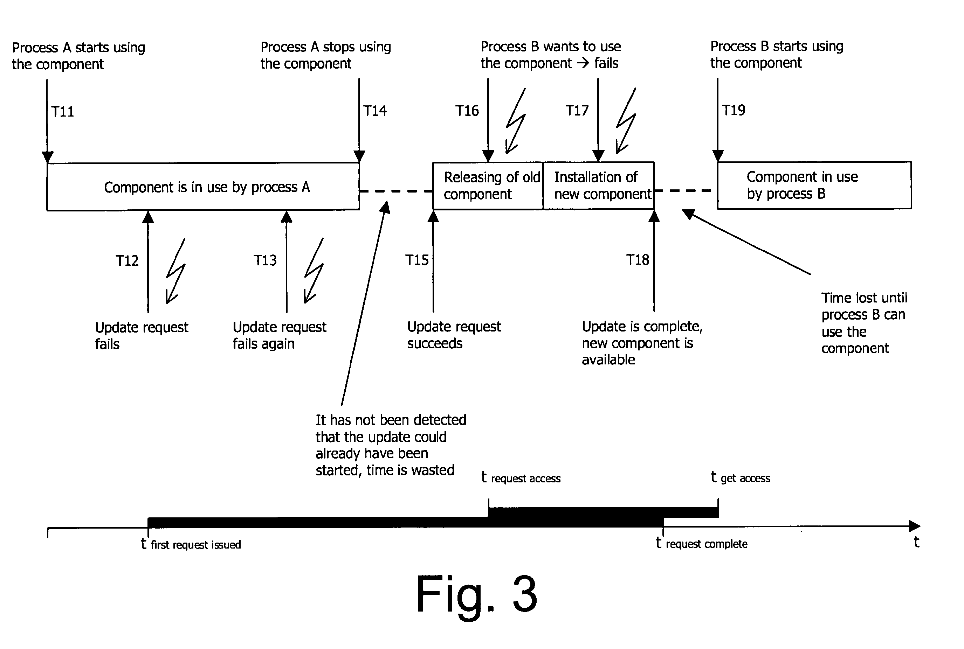

Fig. 3 illustrates the timing of a conventional release request in connection with a request for updating the component. In order to perform an update of a component, the present component is first to be released and uninstalled. The component is in use by process A from T11 to T14. Thus, the release requests T12 and T13 fail. The update procedure is started at T15. Thereon, the component is no longer available. Consequently, the requests T16 and T17 of process B to employ the component fail. After the update has been completed at T18, a successive access of process B to use the component will be successful at T19.

According to the illustrated examples of the prior art, there is a time difference between the termination of the processes using the component (e.g. T7-T8) and the next issue of a release request. A similar delay occurs between the completion of the update procedure, T18 and the successive request, T19 for accessing the updated component. Further, a plurality of requests for releasing a currently used component or accessing a component during an update procedure are required.

The present invention aims to overcome these drawbacks. Based on a single release request, the component is automatically released upon the component is no longer in use.

This is achieved by storing the release requests and monitoring the usage of the relating components. For example, the usage of the component can be monitored by checking in predetermined time intervals whether the component is currently in use. Therefore each component is indicating its usage, for instance, by means of an electronic signal or a particular information stored in the memory. These indications of the components are analysed in predetermined time intervals. Based on the analysed information the usage of the component is determined.

Another example for continuously monitoring the usage of a component is to issue an interrupt request each time a process is starting or stopping to use a component. Further, the interrupt is immediately updating the information showing the usage of the component. For this purpose, a counter is assigned to the component. This counter is increased by one for each process employing the respective component. After the process is terminated the counter is decreased by one. Consequently, a counter value of zero is indicating that the component is currently not in use, whereas a counter value greater than zero is indicating that the respective component is presently in use.

Of course, the state of usage could be also monitored by any other method. For example, it is possible to store an identifier of each process currently employing a component. This identifier could be, for instance, a process ID or a name of the process. For example, the relationship between the components and the processes currently employing the components are stored in a table or a database. After a process has stopped using the component, the relating entry is deleted. Based on this data it is further possible to determine the processes currently using a component. Thus, it would be possible to influence these processes to make a component unused.

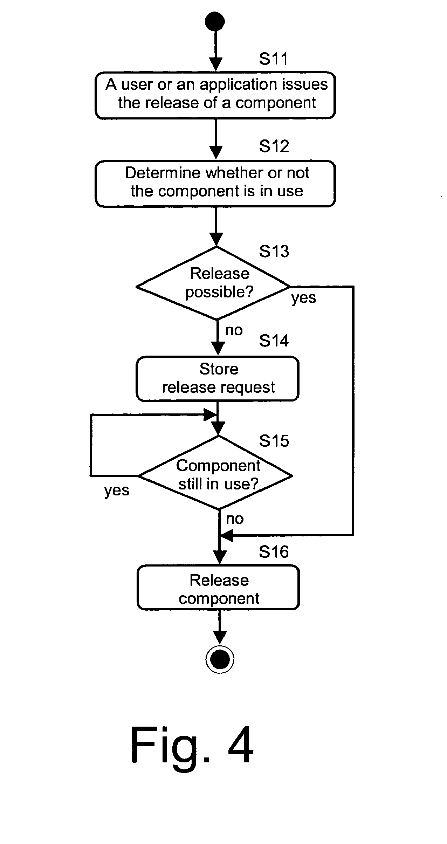

Fig. 4 illustrates a flow chart for releasing a component according to the present invention. First, a request for releasing a component is received, S11. Thereon, step S12 determines, whether or not the relating component is currently in use. For example, this can be achieved directly by obtaining an information from the component indicating whether the component is presently in use. Further, the usage of the component can be determined by referring to the results of the monitoring operation, described above.

If the component is currently in use, the release request is stored, S14. Further, step S15 monitors the use of the component and determines when the component is becoming unused. As soon as the component is no longer in use, the component is released (S16).

The request for releasing a component may be initiated either inside or outside the device. For example, the release is issued by an application running on the device. This application is requesting the release of a software component. A reason for releasing the component is, for instance, to obtain more memory space, or to replace the component by another one. Further, an application may also request to unplug a hardware component, for instance, to reduce the power consumption of the device.

Otherwise, the request for releasing a component may be also issued by an external initiator. For example, this initiator is a network device. When an update of a software component is made available in the network, a network server is requesting to release the present component and to download and install the new component. Further, a license server may detect that a license of an installed component has been expired. Thereon, the license server is requesting to remove the relating component.

Furthermore, a user may manually request to remove a component. For example, the user decides to remove a component, because the features of the respective component are no longer needed. Likewise, the user may replace the component by another one, for instance, replace a storage device or a recording medium.

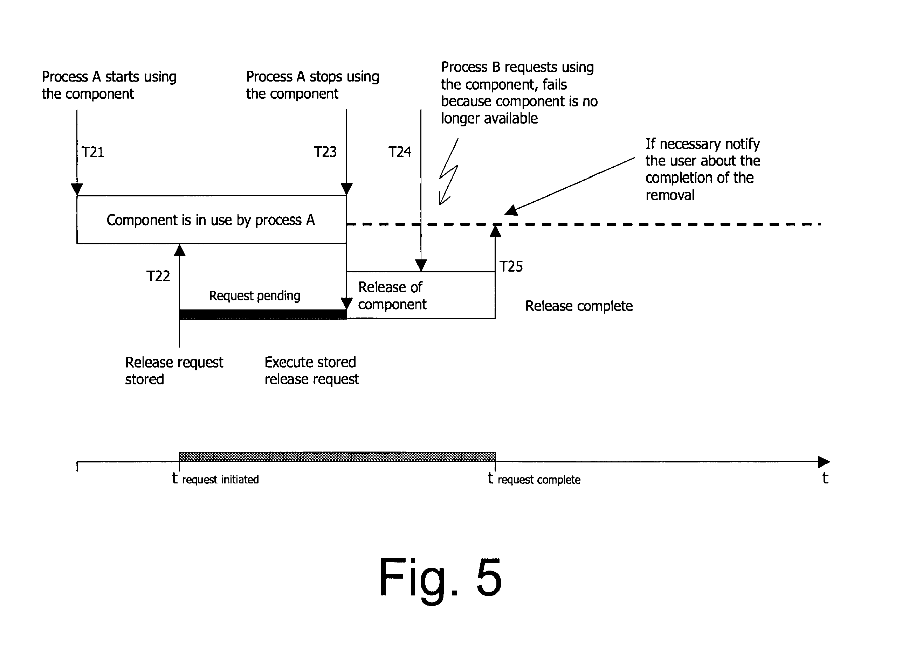

Fig. 5 illustrates a timing diagram for the release of a component according to the present invention. Process A starts using the component at time T21. Thereon, the release request is issued at T22 while the component is still in use. Thus, the request is stored. As soon as process A is completed and the component is no longer in use, the release request is automatically started at T23. As there is no time delay between the termination of process A and the beginning of the release, no further process can occupy the component in the meantime, e.g. Process B at T24. Hence, a delay between the termination of the process using the component and the start of the release is avoided. Further, only a single request has to be issued and it is not necessary to repeat the request even when the component is in use.

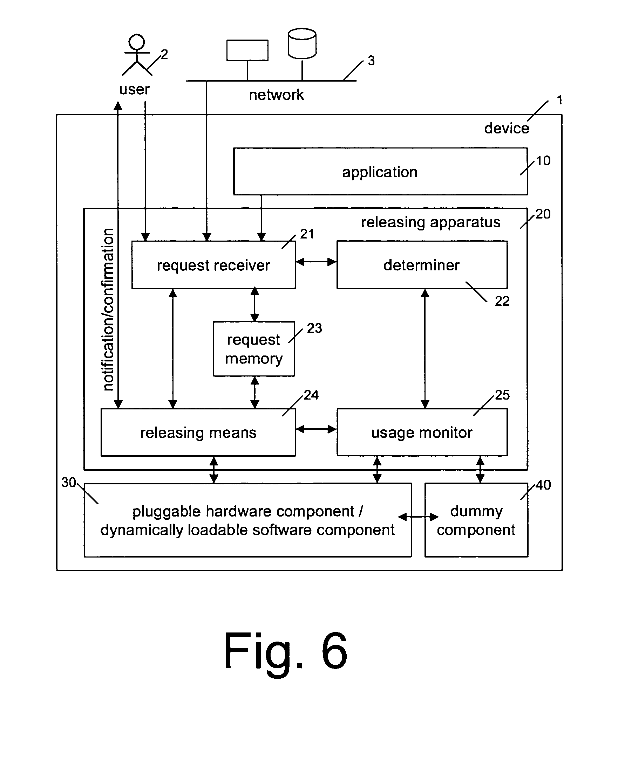

An example configuration of a release apparatus according to the present invention is illustrated in Fig. 6. The releasing apparatus is connected to the installed component 30. Only for illustrative purposes, a single component 30 is shown in this example. However, it is also possible to connect two or more components to the releasing apparatus. Further, the components may be either hardware components, software components, or a combination of hardware and software components.

A monitor 25 is monitoring the usage of the component. For example, this can be achieved by carrying out a monitoring operation as described above.

A receiver 21 is receiving a request for releasing a component. This release request may be issued either by an internal application executed on the device, by a user 2, or by an external device connected over a network 3.

When a release request is received, a determiner 22 is determining whether or not the relating component is currently in use. This can be achieved, for instance, by referring to the monitor 25.

Additionally, the usage of the component can also be determined directly. For example, a hardware component may indicate its usage by means of an optical or electronic signal, e.g. a particular signal is set to "1" as long as the component is employed by a process. Another example for determining the usage of a component is to send a particular request to the component. Depending on the response of the component, it is determined whether or not the component is in use. Furthermore, the usage of the component could be indicated by a particular flag in the memory of the device. As long as the component is in use, this flag is set to a predetermined state, for instance, to "high". When the component is unused, the respective flag is changing to the contrary state.

If it is determined that the component is currently not in use, the release request is sent to a releasing means 24, and the releasing means is releasing the component. Otherwise, the release request is stored in a release memory 23.

A monitor 25 is monitoring the usage of the component. For example, the monitor is counting the number processes currently employing a component as described above.

The releasing means is reading all requests stored in the release memory and observing the results of the monitor for those components relating to a stored release request. As soon as the monitor is indicating that a component is no longer in use, the releasing means starts the release of the component.

According to the illustrated example, only a single release request has to be sent to the releasing apparatus. If the relating component is currently in use the release request is stored. Upon all processes using the component are completed the release request is automatically executed. Thus, it is not necessary to repeat the release request any more.

Accordingly, the release request of a currently employed component will be executed automatically at a later time. Thus, it is neither apparent to the user when the release of component is started nor when the release request has been completed. Consequently, the user might still await the release of the component although the component is already released. Otherwise, the user might not remember a pending release request if the release request has been issued a relative long time before. In this case, the user will be confused when the release request is executed and the respective component is no longer available.

To avoid the aforementioned problems, the user is informed when a component is released. For example, a message is shown on the display of the device. This message is indicating the name or the description of the component which will be released. Further, the release could also be indicated by an acoustical signal, for instance, by a beep. Based on this notification the user knows the moment when the release of the component is started.

Further, the user may want to be informed when the release of the component is completed. Otherwise, the user could await the release of the component although the component has already been released, or the user assumes that the component is released although the component is still in use. In the latter case, the user might remove the component before the release is completed. It is for this purpose that a further notification is provided to the user after the component is released. Accordingly, the user knows the moment when the component is released.

As described above, a more or less long time may elapse between the moment when the release request has been issued and the moment when the respective component becomes unused. However, in the meantime the reasons causing the release request could have changed. For example, the user now knows that he will use the respective component again within a short time. Furthermore, if the release request has been issued in order to obtain additional memory space, this memory space might be obtained in the meantime by the release of another component. If the release request has been issued in connection with the installation of another component, the other component might become unavailable, for instance, due to a broken network connection. In all these cases, the user might wish to cancel the release request. It is for this purpose that a confirmation for the release is awaited before the release request is executed.

The pending release request is indicated to the user and thereon the user has to determine whether or not the release request is to be executed. For example, the user has to press a button in order to allow the release of the component. If the user refuses this conformation, the respective release request is cancelled. Additionally, the release request is also cancelled if the user does not confirm the release within a predetermined time.

In order to prevent that a further process will employ the component while awaiting the confirmation for a pending release, new access requests to this component are blocked while the confirmation is awaited.

As described above, the circumstances causing a release request may change in the course of time. Thus, it is reasonable to delete a stored release request if the request is not executed within a predetermined time period.

For this purpose, each release request is associated with a counter for counting the time being elapsed since the release request was stored. When a release request is stored, the associated counter is set to zero. If the counter value exceeds a predetermined time out value, the release request will be cancelled.

Instead of using a separate counter for each stored release request, it is also possible to store the time when the release request has been issued. If the time difference between the stored time and the system time exceeds the time out value, the release request is deleted.

The user is further informed that a release request will be deleted after the request has been expired. In this case, a new release request is to be issued in order to maintain the release request.

In contrast to deleting the release request after a predetermined time, the release request could also be enforced after the time out period. Therefore, the time since the release request was stored is determined in the same manner as described above.

Upon it is detected that the release request is not executed within a predetermined time period, the release of the component is enforced. For this purpose, all processes currently occupying the component are identified. The identified processes are requested to complete the use of the component as soon as possible. Thereon a further period of time is awaited in which the component may become unused.

When the component is still in use after this further period, a stronger acceleration to release the component is performed. For this purpose, a termination signal is send to all processes currently employing the component. After this termination request has been carried out, the component definitely is no longer in use and can be released. Accordingly, the component is released after a specific period at the latest.

In the following it is described to prioritise one or more of the stored release requests. For this purpose, a priority information is stored in association with each stored release request. Based on this priority information the release request having the highest priority information is executed first.

For example, this priority information has two states, indicating whether the release request has a high priority or a low priority. A more precise gradation of the priority information can be achieved by using multiple priority levels, for instance, by assigning an integer value to each release request. This integer values may be either only positive values as well as positive and negative values.

Depending on the priority information assigned to the release request, different acceleration procedures are performed. For example, if a particular release request has a high priority, all processes employing the relating component are terminated immediately. Thus, the component is released very quickly.

In contrast to this, no acceleration to release the component is performed when a low priority is assigned to a release request. Thus, it is awaited that the processes currently employing the component will terminate without any further influence.

Additionally, different acceleration procedures are performed depending on the priority level assigned to the release request. For example, a faster release of the component is achieved by blocking all new processes requesting to use the component. Additionally, the release could be further accelerated by terminating those processes of low interest and to await only the completion of the remaining processes. For example the user would be less confused if some background processes are cancelled. But on the other hand, the user would not like a main application to be terminated automatically without any warning.

According to the different acceleration procedures, it is possible to accelerate a release of a component depending on the requirements. If the component is to be released very fast, a high priority is assigned to the release request. For example, a new component is needed very soon. Therefore, a present component is to be removed. Thus, the user would like to accelerate the release and accept the termination of some processes. On the other hand, a component is only to be released because its features are no longer needed. If the occupied resources are currently not required for any other component the respective component may become unused without any acceleration procedure. Thus, a low priority is assigned to such a request.

Based on the multiple priorities and different acceleration procedures, it is possible to accelerate the release of a component step by step. Therefore the priority information is increased in the course of time.

When a release request has been issued, it is stored first with a low priority. Additionally, a time stamp or a counter is assigned to the release request. After a predetermined time has been elapsed, the priority is increased. Therewith a different acceleration procedure is selected to release the respective component.

In this way, the release of a component starts with a low priority and a "weak" acceleration procedure. If it is not possible to release the component with this acceleration procedure, the priority and the corresponding acceleration procedure are increased step by step until the component is becoming unused and the release is possible.

Some processes employ a component for a long time. Other components are even permanently in use. To release such a component, it will be necessary to terminate at least some of the processes running on the device. However, each unexpected termination of a process may be annoying to the user.

To reduce the annoyance to the user, the component is released when the state of the device is changing. In this moment, a lot of processes are terminated. Consequently, there is a high possibility that the component is becoming unused while the state of the device is changing.

An example for a change of the state is the establishment of a particular network connection. In this case, the new network connection could provide a higher or lower data rate, the costs for transferring the data may change, or the download of a particular software component will become possible or impossible over the new network connection.

Another example for changing the state of the device and providing a good possibility for releasing a component is the moment when the device is changing into a standby or power save mode, or the disconnection or connection of a mobile device to a docking station. On the one hand, many processes are terminated when the device is changing into such a state. Thus, it would be necessary to terminate only a few remaining processes. Further, the user is busy with bringing the device into the new state. Consequently, the user will not be annoyed so much if one or more additional processes are terminated in this moment.

Additionally, a component can be released when the device is shut down or restarted. During a shut down or a restart procedure all processes are terminated. Every component is becoming unused. Hence, it is possible to release each component without any further activity.

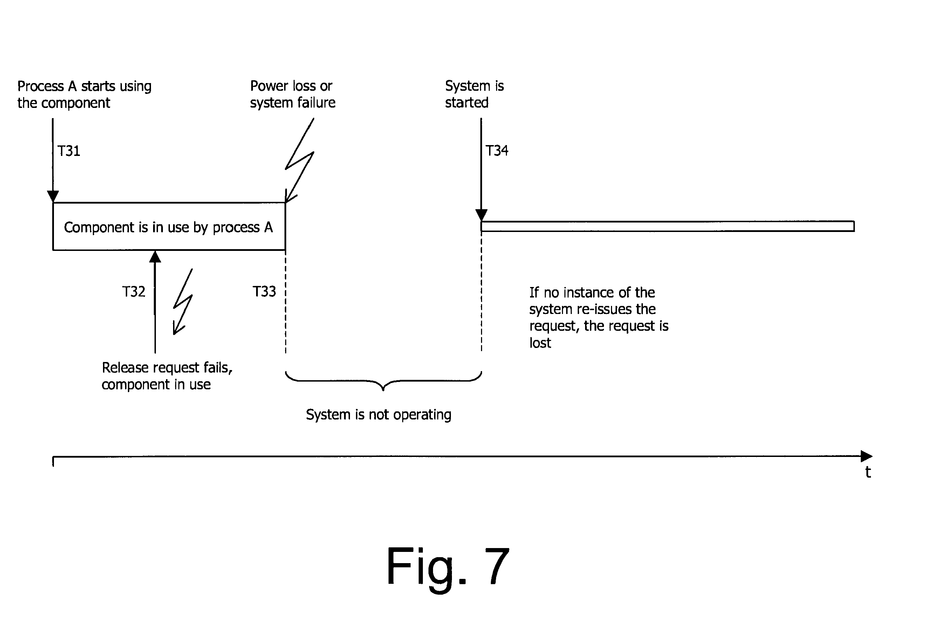

Fig. 7 illustrates a request for releasing a component over the time in connection with a sudden power loss or a system failure according to the prior art. As described above, the release request T32 fails as long as the component is currently in use. At time T33 a power loss occurs. When the device is restarted at T34, the release request is not available and the component will be still installed. Hence, the release request has to be repeated after the device is restarted or the component will not be released.

To maintain a pending release request even if the system is switched off, or a power loss occurs, the release request is stored in a non-volatile memory. Examples of a non-volatile memories are a hard disk drive, an optical storage medium or a memory card. Further, it is also possible to store the release requests in any other kind of memory holding the data while the device is powered off, for instance, a battery buffered memory.

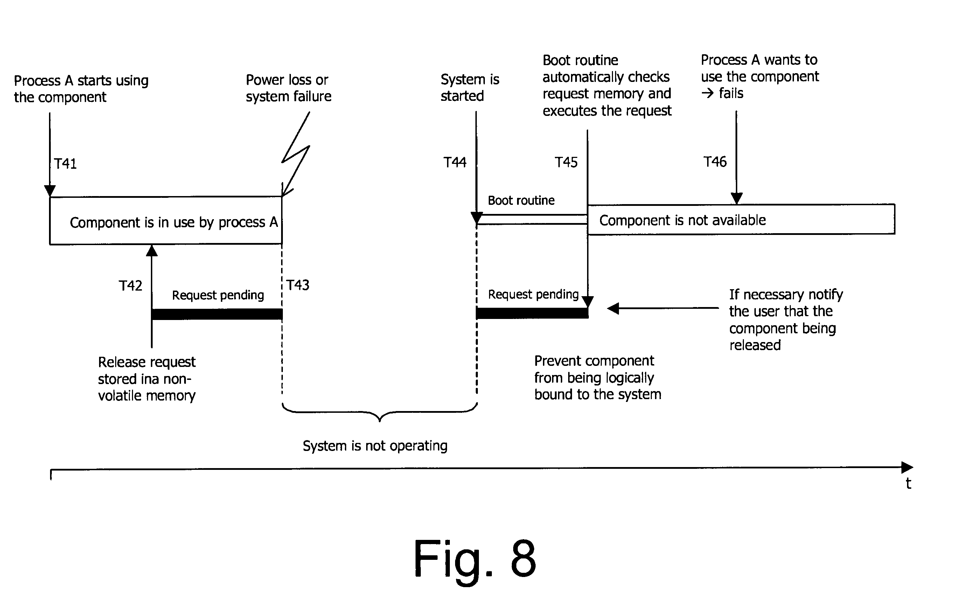

Fig. 8 illustrates a timing diagram for a release of a component according to the present invention when a release request is stored and the device is restarted. When the release request is issued at T42, the respective component is in use. Thus, the release request is stored in a non-volatile release memory. Before the release request can be executed, the system is powered off at time T43, for instance, due to a power loss or system failure. After the power returns and the system is restarted (T44), the pending release requests are read out of the release memory during the initialisation procedure of the system. Thereby, a boot routine automatically checks the request memory and executes the stored request at the time T45. Hence, the component is released before any new process will be able to employ the respective component at time T46.

The following relates to an update or replacement of a component by a new component, wherein the new component is providing similar features. In this case, first the present component is released and uninstalled. Next, the new component is installed. In the meantime, neither the old nor the new component are available. Hence, a conventional request to employ the component according to the prior art will fail during this update or replacement procedure.

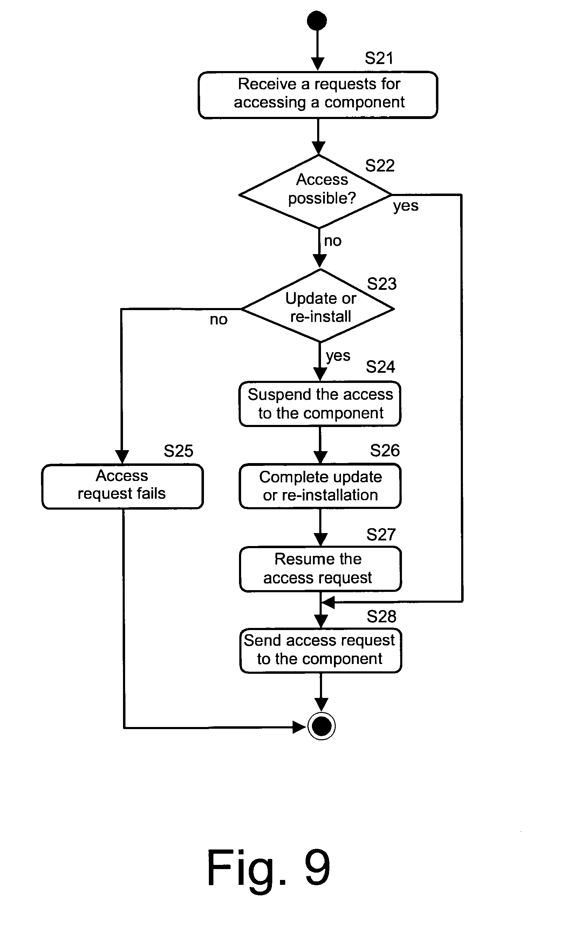

Fig. 9 illustrates a flow chart for employing a component while the component is currently updated. First, a request for employing a component is received at step S21. Thereon, step S22 determines whether or not an access to the component is currently possible. If the component is currently available, the access request is sent to the component and the component is carrying out (S28) the request. Otherwise, step 23 determines whether or not the component is presently updated or reinstalled. If no update or reinstallation process is detected, the access request for the respective component is rejected with step S25. Otherwise, the new component will become available after the update or reinstallation process is completed. In this case, the access request is stored in step S26. When the requested component is available, step S27 resumes the access request, and step 28 sends the request to the newly installed component. Consequently, the access request is to be issued only once, and the respective access request is sent to the new component as soon as the update or reinstallation process is completed.

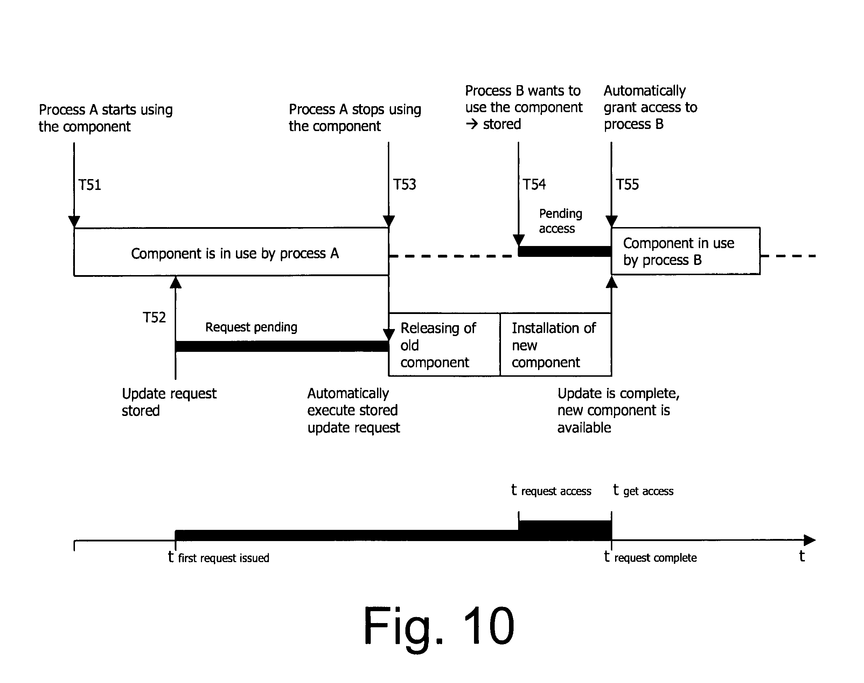

Fig. 10 illustrates the update of a component according to the above described embodiment. The component is employed by process A from T51 to T53. In the meantime an update request T52 is issued. After process A stops using the component the old component is automatically released and the new component is installed to replace the old component. A further process B wants to use the component at the time T54 while the update process is in progress. As the component is not available at this time, the respective access request is stored. At T55, when the update process is completed, the access request of process B is sent automatically to the new component. Hence, neither the update request nor the access request of process B have to be repeated. Both requests are executed as soon as possible.

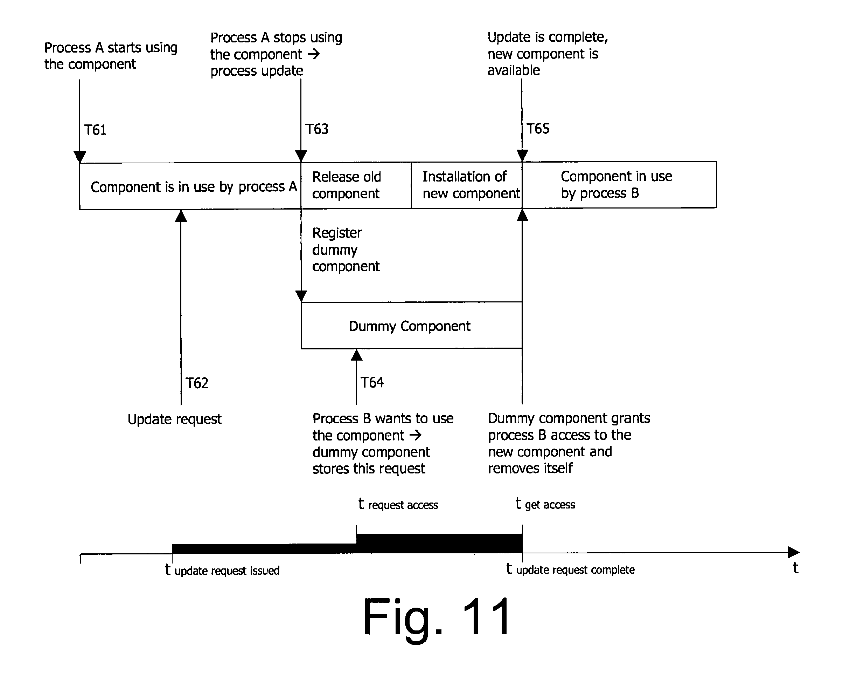

According to another embodiment, the access requests of a process is handled by a so called dummy component. Fig. 11 illustrates a timing diagram using such a dummy component. The component is in use from T61 to T63. Consequently, when a release request is issued at T62, the request is stored. As soon as the component is no longer in use, the component is released and the update or reinstallation is started. At the same time T63 the dummy component is installed for receiving the requests directed to the original component. The dummy component accepts the request issued at T64 in the same manner as the original component, stores the access requests and forwards the requests to the new component as soon as the update or reinstallation process is completed at T65. Thus, all processes running on the device can further issue their access requests to a component in the usual manner even if the component is presently updated or reinstalled.

When a software component is released, the software code usually is lost. To maintain the features of a released software component, the software code is copied to a further memory before the original component is removed or overwritten in the program memory. When the features of a released software component are required at a later time again, the data can be transferred from the further memory back to the programme memory again. Hence, the features of the software component are not completely lost.

The copies of the released software modules are stored in a separate memory on the device. To hold the software code even if the device is powered off, this memory is a non-volatile memory.

Further, it is also possible to store the software components in a locally connected storage device, for instance, a memory card, a hard disk drive or an optical recording medium. Additionally, the software module could also be copied to a network device, such as a network server.

An update or replacement of a software component usually aims to install a new component providing similar or enhanced features compared with the old component. Thus, it is expected that the features of the old component are further available after completing the update procedure. However, if it is not possible to install the new component after uninstalling the old component, the relating features are lost.

Accordingly, it is checked whether or not the new component is available before the old component is released. For example, it is determined whether the new component is already stored in a locally connected memory. Further, the new component can also be received over a network connection. In this case, it is determined, whether the new component is available on the network device and whether a stable network connection to the network device exists. If it is not ensured that the new component can be successfully installed, the release of the old component is suspended.

If the new software component is to be downloaded over a network connection, this download is started immediately after the update request has been received. If the old component is currently in use, the download is performed in advance before the old component is released. Hence, when the old component is becoming unused, the release and update process is carried out without waiting for downloading the new component. Thus, the time for updating the component is reduced.

Preferably, the old component is only released if the download of the new component has been completed and the new component is locally available. Otherwise, there is a risk that the network connection will break down during the download process. Thus, neither the old nor the new component would be available after releasing the old component.

Summarising, the present invention relates to an improved release of a component. If a component relating to an issued release request is currently in use, the request for releasing a component is stored. The usage of the components relating to a stored release request are monitored. As soon as it is detected that a component is no longer in use, the stored release request is automatically executed. By this way, a component is released immediately after all processes using the component have been terminated. As the release request is stored and the usage of the components is continuously monitored, only a single release request has to be issued.

## Claims

1. A releasing apparatus for releasing a component (30) being installed on a device (1), wherein said device (1) executing predetermined operations employing said component (30), said releasing apparatus comprising:
a receiver (21) for receiving a release request for releasing said component (30);
a determiner (22) for determining whether or not said component (30) being currently in use;
a request memory (23) for storing said release request if said component (30) being currently in use; and
a monitor (25) for monitoring the use of said component (30);
a releasing means (24) for releasing said component (30) upon said monitoring means (25) indicating that said component (30) being not in use.

2. An apparatus according to claim 1, wherein said request memory (23) being a non-volatile memory.

3. An apparatus according to claim 1 or 2, wherein said request memory (23) being at least one of a memory-card, a hard disc and an optical memory device.

4. An apparatus according to any of claims 1 to 3, further comprising a first notifying means for notifying a user (2) before said releasing means (24) releasing said component (30).

5. An apparatus according to any of claims 1 to 4, further comprising a second notifying means for notifying a user (2) after said releasing means (24) completing the release of said component (30).

6. An apparatus according to any of claims 1 to 5, further comprising an enabling means for awaiting a user confirmation before said releasing means (24) releasing said component (30).

7. An apparatus according to any of claims 1 to 6, further comprising:
a timer for counting a time elapsed since said release request being received;
a timeout memory for storing a predetermined time value; and
a comparator for comparing the time counted by said timer and the time value stored in said timeout memory;
wherein said releasing means (24) starts executing said release request upon the time value counted by said timer exceeds said time value stored in said timeout memory.

8. An apparatus according to any of claims 1 to 6, further comprising:
a timer for counting a time elapsed since said release request being received;
a timeout memory for storing a predetermined time value;
a comparator for comparing the time counted by said timer and the time value stored in said timeout memory; and
a cancelling means for abandon said release request if the time counted by said timer exceeds said time value stored in said timeout memory.

9. An apparatus according to any of claims 1 to 8, wherein said request memory (23) further storing priority information in association to each release request prioritising the execution of the respective release requests.

10. An apparatus according to claim 9, further comprising an accelerator for accelerating said release request.

11. An apparatus according to claims 10, wherein said accelerator comprises a selector for selecting an acceleration procedure for accelerating said release request, wherein the selection is based on the priority assigned to the respective release request.

12. An apparatus according to any of claims 9 to 11, further comprising:
a timer for counting a time elapsed since said release request being received;
a timeout memory for storing a predetermined time value;
a comparator for comparing the time counted by said timer and the time value stored in said timeout memory; and
a changing means for modifying the priority information if the time counted by said timer exceeds said time value.

13. An apparatus according to any of claims 1 to 12, further comprising a state detector for detecting the state of said device (1), wherein said releasing means (24) executing said release request upon said state detector detecting a predetermined state.

14. An apparatus according to any of claims 1 to 13, wherein said releasing means (24) executing said release request when said device (1) being restarted.

15. An apparatus according to any of claims 1 to 14, further comprising
an access receiver for receiving an access request for said component (30) released by said releasing means (24);
an access memory for storing access requests for a released component;
an installation detector for detecting a reinstallation or an update of a released component; and
a forwarding means for supplying a stored access request to the respective component (30) upon said detector detecting that said component (30) being reinstalled or updated.

16. An apparatus according to claim 15, wherein (40) said access receiver, said access memory, said installation detector and said forwarding means being included into a dummy component

17. An apparatus according to any of claims 1 to 16, wherein said component (30) being a pluggable hardware component.

18. An apparatus according to claim 17, further comprising an ejecting means for automatically ejecting said hardware component (30) after releasing the component (30).

19. An apparatus according to claim 18, further comprising:
a locking means for locking said hardware component (30) installed on said device (1);
a release detector for determining whether said component (30) being released; and
an unlocking means for unlocking said hardware component (30) after detecting that said component (30) being released.

20. An apparatus according to any of claims 1 to 16, wherein said component (30) is a dynamically linkable software component.

21. An apparatus according to claim 20, further comprising a copying means for copying said software component (30) to another memory.

22. An apparatus according to claim 20, further comprising a download means for downloading a further software component.

23. An apparatus according to claim 22, further comprising a completion detector for detecting that the download of the further component being completed, wherein said releasing means (24) starts releasing the software component (30) when said completion detector detecting the completion of the download and said monitoring means (25) detects that said component (30) being not in use.

24. An apparatus according to claim 22 or 23, further comprising an availability means for determining whether said further software component being available over a network, wherein said releasing means (24) only releasing said software component (30) if said further software component being available over the network.

25. An apparatus according to any of claims 1 to 24, wherein said device (1) being a mobile device.

26. A method for releasing a component (30) being installed on a device (1), wherein said device (1) executing predetermined operations employing said component (30), said method comprising the steps of:
receiving (S11) a release request for releasing said component (30);
determining(S12) whether or not said component (30) being currently in use;
storing (S14) said release request if said component (30) being currently in use;
monitoring (S15) the use of said component (30); and
releasing (S16) said component (30) upon said monitoring step (S15) detecting that said component (30) being not in use.

27. A method according to claim 26, wherein said storing step stores the release request in a non-volatile memory.

28. A method according to claim 26 or 27, wherein said storing step stores the release request in at least one of a memory-card, a hard disc and an optical memory device.

29. A method according to any of claims 26 to 28, further notifying a user (2) before releasing said component (30).

30. A method according to any of claims 26 to 29, further notifying a user (2) after completing the release of said component (30).

31. A method according to any of claims 26 to 30, further awaiting a user confirmation before releasing said component (30).

32. A method according to any of claims 26 to 31, further starting executing said release request if the release request being not executed within a predetermined time.

33. A method according to any of claims 26 to 31, further abandoning said release request if the release request being not executed within a predetermined time.

34. A method according to any of claims 26 to 33, further storing priority information in association to each release request, prioritising the execution of the respective release request.

35. A method according to claim 34, further performing a procedure for accelerating said release request.

36. A method according to claims 35, further selecting different acceleration procedures based on the priority assigned to the respective release request.

37. A method according to any of claims 34 to 36, further modifying the priority information upon the release request being not executed within a predetermined time.

38. A method according to any of claims 26 to 37, further executing said release request upon the device (1) changed into a predetermined state.

39. A method according to any of claims 26 to 38, further executing said release request upon the device (1) being restarted.

40. A method according to any of claims 26 to 39, further comprising the steps of
receiving (S21) an access request for a released component;
storing (S24) the received access request; and
supplying (S28) the stored access request to the respective component (30) upon said component being reinstalled or updated.

41. A method according to claim 40, further installing a dummy component (40) for receiving (S21) and storing (S24) the access request, and for supplying (S28) the access request to the respective component.

42. A method according to any of claims 26 to 41, wherein said release request being a request for releasing a pluggable hardware component.

43. A method according to claim 42, further automatically ejecting said hardware component (30) after completing the release request for the respective hardware component (30).

44. A method according to claim 42, further comprising the steps of
locking said hardware component (30) when installing the hardware component (30); and
unlocking said hardware component (30) after completing said release request.

45. A method according to any of claims 26 to 41, wherein said release request being a request for releasing a dynamically linkable software component.

46. A method according to claim 45, further copying said software component (30) to another memory.

47. A method according to claim 45, further downloading another software component.

48. A method according to claim 47, wherein said releasing step releasing the software component (30) upon completing the download of the other software component and said component (30) being not in use.

49. A method according to claim 47 or 48, wherein said releasing step only releasing said software component (30) if the other software component being available over the network (2).

50. A method according to any of claims 26 to 49, wherein said releasing step releasing a component (30) being installed on a mobile device.

51. A computer program product comprising a computer readable medium having computer readable program code embodied thereon, the program code being adapted to carry out all steps of any of claims 26 to 50.
